# EUROPEAN PATENT APPLICATION

(11) **EP 4 837 785 A1**
(43) Date of publication of application: **11.11.2026**
(21) Application number: 25174316.7
(22) Date of filing: 05.05.2025
(51) Int. Cl.: B60Q 1/00

(54) **COVER FOR A VEHICLE LAMP WITH AN AREA FOR CREATING A SERVICE OPENING**

(71) Applicant: Hella Autotechnik Nova s.r.o., 78985 Mohelnice (CZ)
(72) Inventor: Fiser, Petr, 73532 Rychvald (CZ); Hranicky, Stanislav, 73532 Rychvald (CZ); Vrana, Vojtech, 75366 Hustopece nad Becvou (CZ)
(74) Representative: Behr-Wenning, Gregor

(57) **Abstract**

Cover (1) for a vehicle lamp (2) comprising at least one wall (3), which comprises an openable area (4) for creating a service opening (5) in the cover (1). The openable area (4) is delimited by a weakening of the wall (3), such as a groove (10). The cover (1) further comprises a manipulation element (6) attached to the wall (3) within the openable area (4). The manipulation element (6) comprises a cavity (7) for insertion of a tool (8) for initiating pry-opening of the openable area (4) and a reinforcement (9) for stiffening the cavity (7). The reinforcement (9) can be ribs.

## Description

### Technical Field

The present invention relates to vehicle illumination, especially to headlamps and taillamps. More specifically it relates to lamps which are designed to be reparable, wherein a service opening for e.g., replacing a light source, can be created in the lamp's cover.

### Background of the Invention

Vehicle lamps with an openable cover, for allowing maintenance and repairing of the lamp, are known in the state of the art. Due to environmental reasons, some countries even mandate such repairability by law. Usually, a back side of such lamp contains an area delimited by a groove, and this area can be torn away, thanks to the weaking of the cover's wall by the groove. When a repair is needed, e.g., replacement of a light source, the openable area is pierced (e.g., by a screwdriver) and then cut or torn away by pliers or pincers. After the repair is completed, the opening is closed, e.g. by gluing the separated part of the wall back or attaching a new lid over the opening. A disadvantage of this approach is that the piercing is quite dangerous, e.g., when the screwdriver slides along the wall instead of going through. Another disadvantage is that pieces of plastic from the cutting and piercing can get inside the lamp.

Document DE102005035577 A1 discloses an example of a repairable vehicle lamp. To avoid the above-mentioned dangerous and complicated opening, a tear strip is provided around the openable area. A tab protrudes from the strip towards the outside of the lamp, and pulling this tab start tearing away the strip, which opens a service opening. A disadvantage of this approach is in a more complicated forming of the cover. The tear strip needs to be partially separated from the surrounding wall on both sides, and the openable area needs to protrude from the wall to provide space for the strip.

It would therefore be advantageous to provide another way of providing service openings to vehicle lamps, which would be more practical to use.

### Summary of the Invention

The shortcomings of the solutions known in the prior art are to some extent eliminated by a cover for a vehicle lamp. The cover comprises at least one wall, and this wall comprises an openable area for creating a service opening in the cover. The openable area is delimited by a weakening of the wall. The cover further comprises a manipulation element attached to the wall within the openable area, wherein the manipulation element comprises a cavity for insertion of a tool for initiating pry-opening of the openable area. The manipulation element further comprises at least one reinforcement for stiffening the cavity.

The weaking makes the part of the wall which is the openable area easier to deform - break away. The weakening can e.g., be provided by a thinning of material of the wall, e.g., around the area or on the whole area - it can then have a form of a groove around the area, and possibly also across of it, a form of a thinner layer of material forming the area or a part thereof, a form of a cavity or cavities inside of the wall splitting the wall into two layers, etc. The openable area is thus a "snap-off" section of the wall, which is pre-formed for being removed.

Preferably, the weakening surrounds the openable area, and potentially also further divides it into sub-areas (described below in more detail), but most of the openable area is not weakened, e.g., it can have the same thickness and strength as the rest of the wall. The weakening thus forms a break-off line, but the rest of the area or sub-area will likely stay in one piece, not forming any small fragments that could fall into the lamp.

The cover is preferably made from plastic, as is usual for vehicle lamps. A metal or a composite can however also be used. Position and size of the openable area can be chosen based on an expected service operation that might need to be done. It can e.g., be on a back side of the cover - opposite to the light-output direction of the lamp, and can be large enough to put a hand through, e.g., in order to remove a heat sink with an attached PCB with LEDs.

The manipulation element provides a place for engagement of a tool with the openable area. The shape and size of the cavity can vary - it is preferably sized to fit a flat-head screwdriver, which is a common tool, so it is practical to use it for opening the service opening. Other tools, such as a cross-point screwdriver, a crowbar, a chisel, a claw hammer, a bradawl etc., can also be used, and the cavity can then be shaped to accommodate such tools. The manipulation element is also sturdy enough, due to the reinforcement, to not buckle easily during prying. The openable area can thus be opened, and the risk of breaking away the manipulation element without opening the area, or of bending the manipulation element etc., is minimized.

Preferably, the manipulation element is from one piece of material with the openable area, preferably also with the rest of the wall or the whole cover. The cover can e.g. be injection molded.

The cavity has cavity walls, or at least one wall, and preferably also a bottom, so that the lamp with the cover can be fully closed. The cavity walls are preferably higher than the cover wall is thick, i.e., the cavity protrudes from the wall, to provide enough surface for bracing the tool. For example, the cavity can be 3-20 mm wide, 1-10 mm thick, and 3-20 mm deep, preferably e.g. 6-8 mm wide, 1-2 mm thick, and 4-5 mm deep, to comfortably fit an average flat-head screwdriver. The cavity walls can have the same thickness as the cover wall. They can also be thicker, as a form of reinforcement.

The cavity can have a constant cross-section along its whole depth, or the cross-section can change, e.g., it can get narrower towards the bottom, or wider towards the bottom. A narrowing cavity can more easily snugly accommodate different sizes of tools, while a widening cavity can make firm bracing of the tool during prying easier, so a skilled person can choose from both possibilities, or use a constant cross-section cavity, based on their specific application.

Preferably, the cavity is closed on all sides, i.e., top, bottom, left and right when viewed in the direction of tool insertion. This ensures that the tool cannot slip and hurt the worker who is opening the cover.

The reinforcement preferably connects the cavity wall(s) to the cover wall at the openable area, e.g., by ribs or lamellas or a flange or collar around the cavity. That way, the reinforcement not only makes the cavity stiffer, but also increases contact surface area between the manipulation element and the wall at the openable area, which can make opening easier and makes breaking of the manipulation element less likely.

The present invention thus makes it possible to create a service opening through a lamp cover with a common tool, such as a screwdriver, more easily and safely than in the state of the art. Especially the starting of the opening, which is often done by brute-force piercing the wall so that pliers or a knife can be inserted, is made significantly easier and safer. The risk of damaging the lamp and of creating small pieces that fall into the lamp is also reduced by the invention.

The cavity can for example be a flat cavity for insertion of a flat-head screwdriver or a cross-shaped cavity for insertion of a cross-point screwdriver. A flat cavity, e.g., with a width of at least two times, preferably at least three times, its thickness, is more preferred, because it allows a wider variety of tools to be used. The cavity can thus have a rectangular cross-section, potentially with beveled or rounded corners.

The reinforcement for stiffening the cavity can for example comprise at least one of: one or more reinforcing ribs, thickness of wall of the cavity larger than thickness of the wall of the cover, and/or material of the wall of the cavity stronger than material of the wall of the cover.

Increasing thickness of cavity wall(s) and/or using ribs, flanges or similar elements, is preferable, because it allows the whole cover to be made from a single piece of material. The thickness of cavity walls can e.g. increase gradually, such that the walls are thicker closer to the cover wall, or there can be a step provided on the wall, etc. The thickness can also be increased, e.g., when compared to thickness of the non-weakened cover wall, uniformly, i.e., with the whole cavity wall having constant thickness.

In an advantageous variant, the cavity is a flat cavity with a rectangular cross-section with two larger sides and two smaller sides, wherein the reinforcement comprises for each of the larger sides of the cavity at least one rib attached to the larger side and attached to the wall of the cover at the openable area. The larger sides of the cavity are the sides where a screwdriver will be braced during opening, so reinforcing both of them is advantageous. There can be only one rib on each side, or multiple ribs. Length of the ribs (i.e., their dimension extending away from the cavity wall, when viewed in the direction of inserting the tool) can e.g., be at least equal to thickness of the cavity wall. At least one rib on one of the larger sides has preferably length of at least two times the thickness of the cavity wall, to provide enough lever for easier opening.

The depth of the cavity is preferably at least two times larger than thickness of the wall of the cover, on order to provide sufficient bracing area for the tool. Preferably, it is at least three times larger.

The weaking of the wall can for example comprise at least one of: a groove delimiting the openable area, a different material on at least part of the openable area, and/or the openable area being from a thinner layer of material than rest of the wall of the cover. As described above, the use of one or more grooves is preferred.

The whole openable area can be surrounded by a groove or multiple grooves, i.e., the grooves can form a closed curve. Preferably, there are no corners on the perimeter of the openable area, to reduce the risk of forming sharp pieces and reduce the risk of damaging the cover outside of the openable area. A corner at the perimeter of the openable area could e.g. concentrate stress and cause a fracture spreading into the rest of the cover. The openable area is thus preferably circular or oval.

It is also possible to leave some parts of the perimeter of the openable area unweakened. There can e.g. be a partition between two or more grooves delimiting the area, where the partition can e.g. be of the same thickness as the surrounding wall of the cover.

The groove(s) can for example have a depth of between one third and two thirds of the thickness of the wall. Their cross-section can e.g. be in the form of a half of a circle or oval, but they can also have rectangular, triangular or trapezoidal cross-section.

The weaking of the wall can be formed by grooves in the wall, wherein the openable area comprises at least two sub-areas, which share at least one groove, wherein one of the sub-areas is smaller than another sub-area, wherein the smaller sub-area contains the manipulation element.

The sub-areas are thus individually breakable parts of the cover wall. The shared grooves ensure that after the sub-areas are removed, a one continuous service opening is created. When there are more than two sub-areas, they also preferably form a single continuous openable area.

It is also possible to divide the openable area into sub-areas when a different form of weaking than grooves is used, e.g., by using partitions between sub-areas formed by protrusion in the cover wall - i.e., when the weaking is a thinning of the wall.

Placing of the manipulation element into a smaller sub-area makes it easier to start opening the openable area - smaller sub-area is easier to break off. The other sub-areas can then, e.g., be removed by pliers.

Preferably, at least one fourth of surface area of the smaller sub-area containing the manipulation element is covered by the manipulation element. When viewed in the direction of insertion of the tool, the area inside of the sub-area is thus at least from one fourth covered by the manipulation element. This ensures that the sub-area is easier to remove - its edges are relatively close to the manipulation element, and thus will have a lesser tendency to bend.

The openable area can comprise at least one corner for stress concentration during opening. This corner is preferably not at the outer perimeter of the area, i.e., it forms a border between two sub-areas. The corner can then be the first point where the openable area starts to open, which leads to easier and more controlled opening.

The corner can have two sides, and the manipulation element can then be located in the corner at a distance of at most 1 cm from each of the two sides. Preferably, the distance is at most 5 mm, or even at most 2 mm. This distance is the shortest distance between the manipulation element and the sides - it can e.g., be between a free end of a rib and one of the walls.

The manipulation element can be located symmetrically relative to the corner - e.g., an axis of the corner is an axis of symmetry of the element.

In an advantageous variant of the invention, the manipulation element is located in a smaller sub-area, which has a corner directed towards another sub-area(s). The manipulation element has a rib on its larger side corresponding to an inner side of the cavity where a flat-head screwdriver can be braced. This rib extends into the corner, i.e., it is also symmetrical around the corner axis. The free end of the rib is at most 5 mm away from the tip of the corner. This variant allows easier breaking-off of the sub-area, and the other sub-areas can then easily be removed, if needed, e.g. with pliers.

Preferably, in this variant, the manipulation element also has a rib on each shorter side, wherein on each side, the shorter rib extends towards one side (e.g. one groove) forming the corner, to a distance of at most 5 mm from this side. There are thus at least two ribs close to each side of the corner, which makes it easier to form a break line along the side of the corner. The side facing away from the corner can also have a rib.

The cover has an inner side and an outer side - the outer side is on the outside of the resulting lamp, while the inner side faces towards the light source, optical elements, lamp modules, etc. The manipulation element can protrude from the inner side. It can then also protrude from the outer side but preferably does not. This has the advantage that the manipulation element, which does not protrude outwards, is less likely to be accidentally hit - which could damage it or even open the openable area unintentionally.

The manipulation element can also protrude from the outer side. This has the advantage that it is more apparent on the cover for workers, that the manipulation element is there and what it is for. It also allows for the element to be grabbed by pliers, e.g., when a screwdriver is not available. Outwards protruding manipulation element can also provide a better access - it can be easier to pry-open the openable area.

A lid or a cap, for closing the service opening after the required service operation is done, can be provided together with the lamp.

The cover can be a part of a headlamp or taillamp, or of any other interior or exterior vehicle lamp, e.g., of an illuminated front grille. Such a lamp can further comprise any standard lamp elements, especially optical elements such as lens and reflectors; electronic elements, such as light sources, actuators, sensors, wiring or control units; illumination modules, etc. The cover can have various shapes and can enclose the whole lamp or only a part of it. The openable area can be at any part of the cover, e.g., at the back, at the bottom, at the top etc. The cover can also comprise multiple openable areas.

A procedure of creating a service opening in a vehicle lamp cover can, with the present invention, have the following steps:
- Inserting a tool into a cavity formed in a manipulation element at an openable area on a wall of the cover, where the openable area is delimited by a weakening of the wall.
- Prying with the tool at the cavity, wherein the manipulation element is reinforced to limit its deflection during the prying to better transfer stress from the prying to the openable area, especially to the weaking around the manipulation element.
- Creating the service opening by removing at least a part of the openable area of the wall.

A service operation, such as a light source replacement, can then occur, and then the service opening can be closed again.

Different components than light sources can naturally be replaced via the service opening, such as motors, wiring or other electrical components, actuators or other mechanical components, optical components, etc. Size, shape and position of the openable area, or of one of multiple openable areas, can then be chosen based on which component(s) might need to be repaired or replaced via a corresponding service opening.

The procedure preferably includes firstly removing a sub-area carrying the manipulation element, and then optionally removing further sub-areas. Other preferable features of the procedure can be apparent from the above description of the cover according to the invention.

### Description of Drawings

A summary of the invention is further described by means of exemplary embodiments thereof, which are described with reference to the accompanying drawings, in which:
- Fig 1.: Shows a perspective view of a wall of a headlamp cover, with a circular openable area, wherein the area is divided into multiple sub-areas, each delimited by a groove, and one of the sub-areas contains a reinforced manipulation element for prying this sub-area open with a flat-head screwdriver.
- Fig 2.: Shows a rear view of the part of the wall from fig. 1.
- Fig 3.: Shows a detail of the manipulation element from fig. 1.
- Fig 4.: Schematically shows a cross-section of a lamp with the cover comprising the wall from fig. 1.
- Fig 5.: Shows the lamp from fig. 4 after the service opening is created by removing the openable area.
- Fig 6.: Schematically shows insertion of a screwdriver into the manipulation element from fig. 3.
- Fig 7.: Shows a drawing of prying-open of the service opening.
- Fig 8.: Shows a schematic view of a lamp with a cover according to an alternative embodiment where the manipulation element protrudes inwards.

### Exemplary Embodiments of the Invention

The invention will be further described by means of exemplary embodiments with reference to the respective drawings.

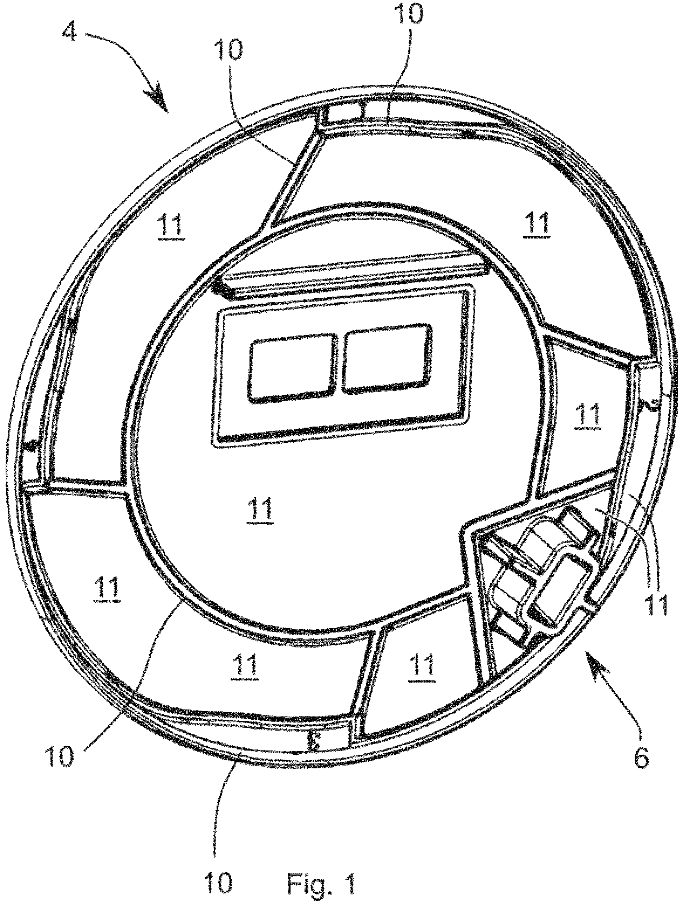

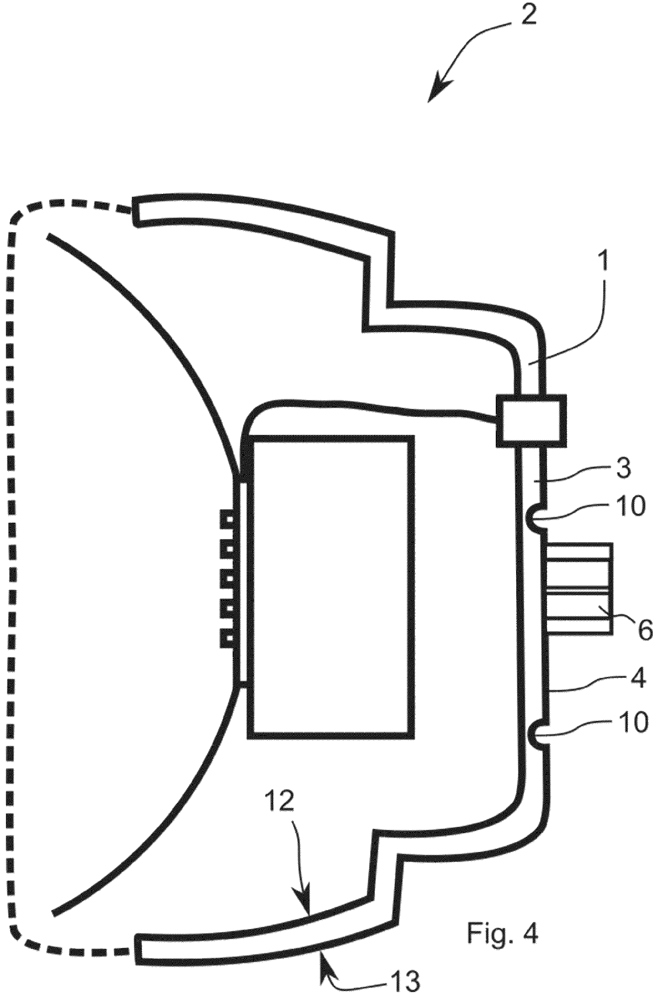

A first embodiment of the invention is shown in figs. 1 to 7. This embodiment is a repairable vehicle headlamp 2, schematically shown in fig. 4. The headlamp 2 has standard illumination and electronic components - a transparent cover 1, reflector, PCB with LEDs, heat sink and a power input. The power input is shown as a cable extending from the PCB to the back side of the lamp 2. The main part of the lamp 2 is its cover 1, which in fig. 4 encloses the right half of the lamp 2.

The cover 1 has a circular openable area 4 on its back side. This area is delimited by a circular groove 10 which weakens the back wall 3 of the cover 1 such that the openable area 4 can be snapped off from the wall 3 of the cover 1 in order to create a service opening 5. The opening 5 is large enough that the heat sink, to which the PCB is glued, can be replaced through the opening 5. The lamp 2 can thus be repaired if the PCB or the LEDs get damaged.

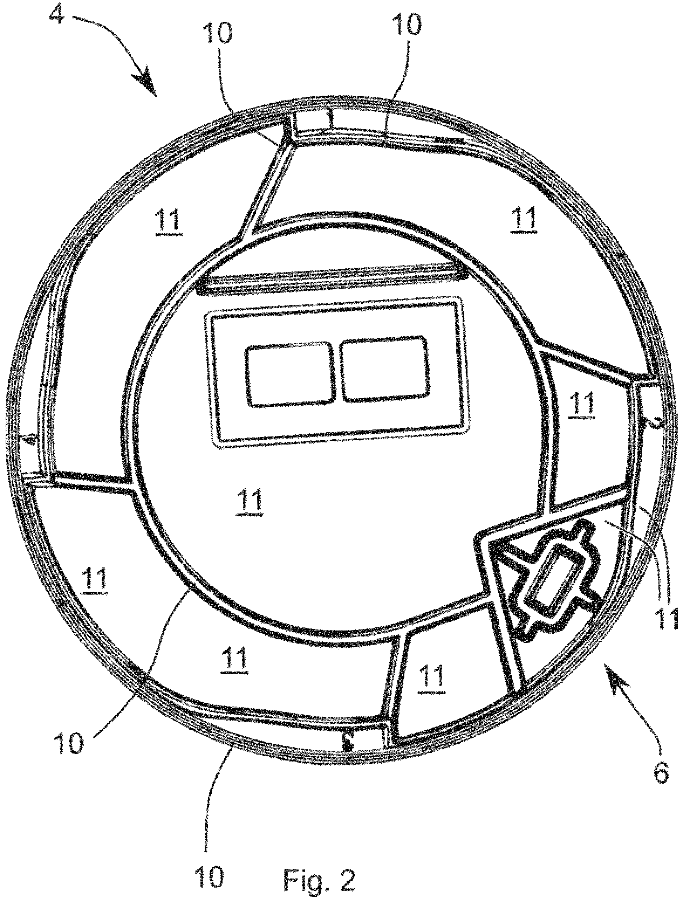

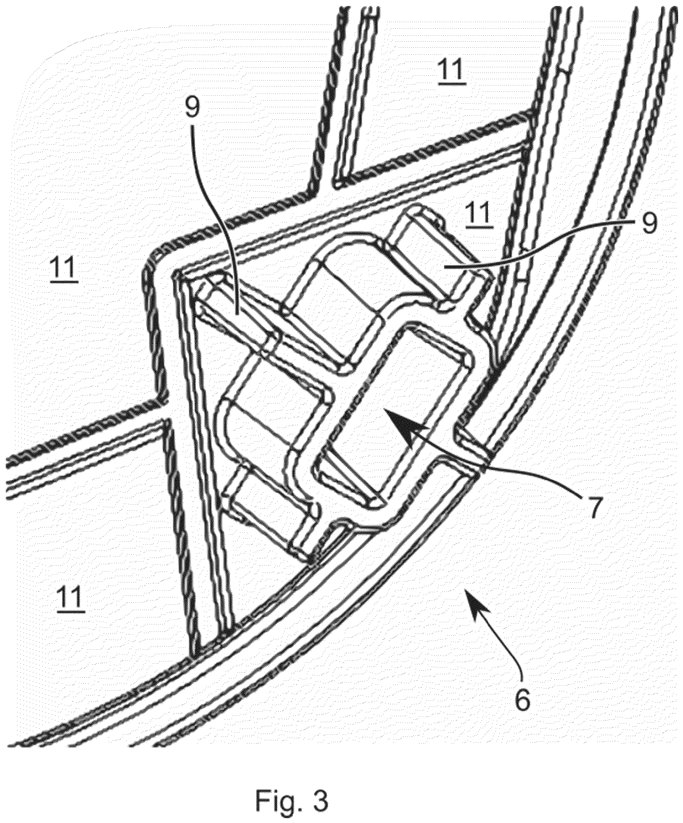

The openable area 4 does not snap off in a single piece but is divided into sub-areas 11 by further grooves 10 (see figs. 1 and 2). The sub-areas 11 include a large central sub-area 11, which is circular, and several smaller irregular sub-areas 11 around its perimeter. One of the smaller sub-areas 11 is provided with a manipulation element 6 (see detail in fig. 3) which is designed to enable prying this sub-area 11 open with a flat-head screwdriver or similar tool 8.

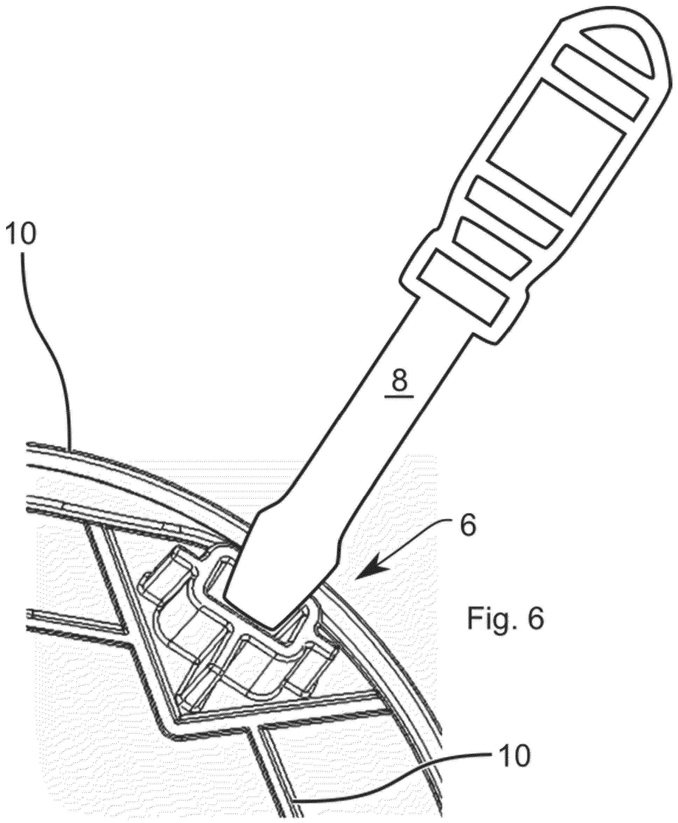

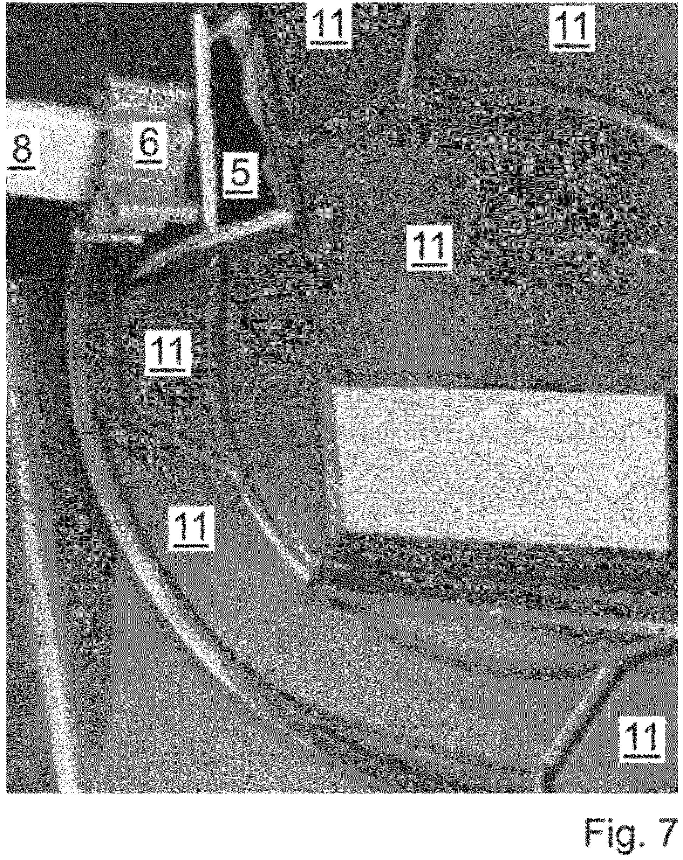

The manipulation element 6 comprises a cuboidal protrusion extending from the outer side 13 of the lamp 2, and four reinforcing ribs. The protrusion comprises a cavity 7, which is closed at the bottom and at all four sides by sidewalls formed by the protrusion. The cavity 7 has a cross-section in the shape of a rectangle with rounded edges. The cross-section is constant across the whole depth of the cavity 7, the bottom is aligned with the wall 3 of the cover 1, and the walls of the cavity 7 have the same thickness as the wall 3 of the cover 1 (outside of the grooves 10 where the thickness is smaller). This cavity 7 is sized to fit a head of a flat-head screwdriver (see figs. 6 and 7), wherein by prying with the screwdriver, the whole sub-area 11 can be broken from the wall 3 of the cover 1 thanks to the grooves 10.

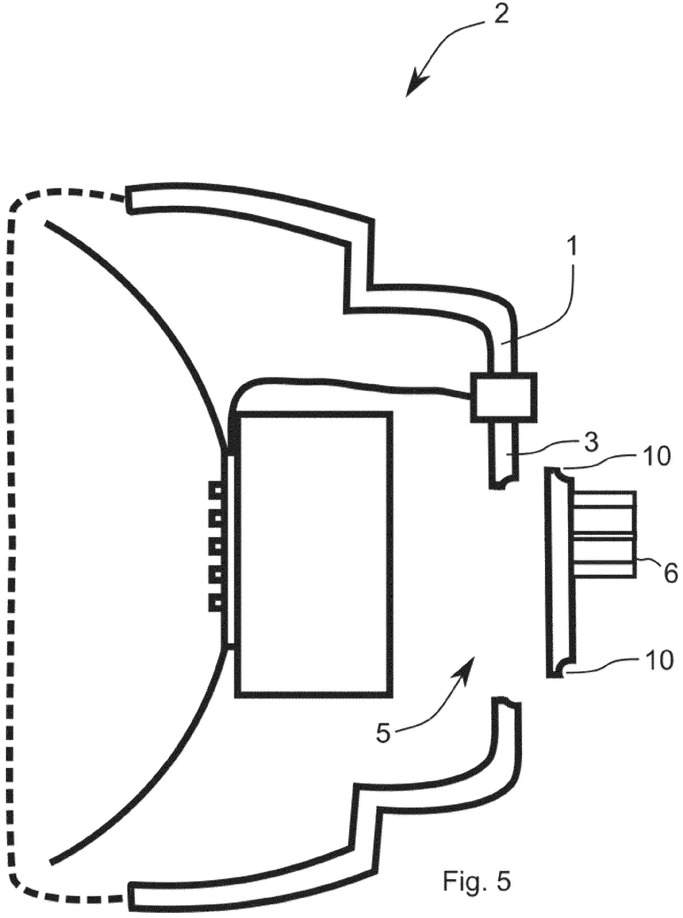

The grooves 10 have a cross-section of a half of a circle and their depth is roughly a half of the thickness of the cover 1 wall 3. All the grooves 10 are connected together, and each sub-area 11 is fully enclosed by groove(s) 10. The whole cover 1 is from one piece of injection-molded plastic, i.e., the shape of the grooves 10 is given by the shape of a mold. The simplified figs. 4 and 5 do not show the division into sub-areas 11 for sake of clarity, i.e., the whole openable area 4 is shown to break away in one piece in fig. 5.

The ribs of the manipulation element 6 form a reinforcement 9 which ensures that a movement of the tool 8 will open the sub-area 11 and it won't merely break the manipulation element 6 from the surface of the sub-area 11. The ribs are located one on each side of the rectangular shape of the cavity 7, on the outside of its walls. Each rib extends from the cavity 7 towards the edge of the sub-area 11 such that it touches one of the grooves 10. Roughly two fifths of the surface of the sub-area 11 are covered by the manipulation element 6. I.e., when viewed from the back, roughly two fifths of the space delimited by the grooves around this sub-area 11 are covered by the cavity 7, its walls and the ribs. The extension of the ribs to the edges ensures that movement of the tool 8 is transferred to the surface of the sub-area 11 to break it away.

The sub-area 11 with the manipulation element 6 is roughly triangular. One of its corners, which faces away from the outer perimeter of the openable area 4, has a symmetry axis which is also a symmetry axis of the whole manipulation element 6. One longer side of the cavity 7 faces towards this corner and a longer rib extends into the corner from the cavity 7. When the tool 8 is used for opening this sub-area 11, the tool 8 pushes this corner upwards or downwards (in the direction of inserting the tool 8 into the cavity 7), and stress is concentrated in this corner such that it is likely to be the first point of opening.

Each rib has the same height as the cavity 7, and the same thickness as the walls of the cavity 7. Each rib is fixed to the cavity 7 as well as the surface of the sub-area 11. The depth of the cavity 7 is roughly 2.5 times larger than the thickness of the cover 1 wall 3. The inner side 12 of the cover 1, opposite to the openable area 4, is flat, i.e., in this embodiment, the grooves 10 are not noticeable from the inner side 12, and neither is the manipulation element 6.

After the first sub-area 11 with the manipulation element 6 is opened (see fig. 7), the remaining sub-areas 11 can be removed by pliers. All of the sub-areas 11 can be removed, or some of them can stay if only a smaller service opening 5 is needed. After the repair of the lamp 2 is completed, the service opening 5 is covered with a new lid which is glued to the cover 1.

### Second embodiment:

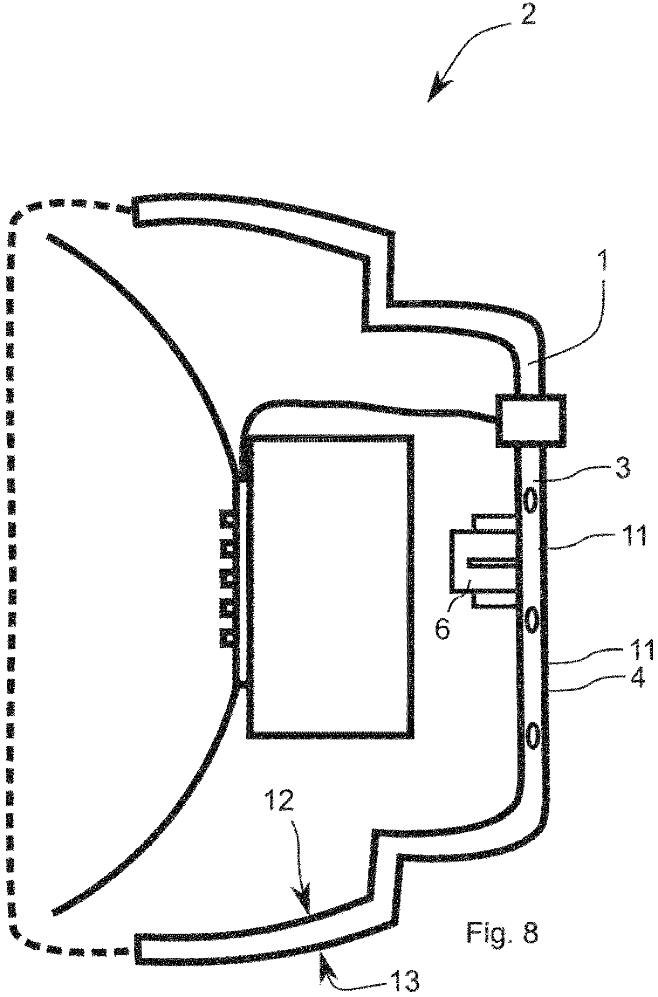

A second exemplary embodiment of the invention is shown in fig. 8. This embodiment is the same as the first embodiment, except that the openable area 4 is constructed differently in the following aspects.

Firstly, the weaking delimiting the openable area 4 and the sub-areas 11 is realized as a channel inside of the cover 1 wall 3 instead of a groove 10 on its surface. The wall 3, at the areas where there are grooves 10 in the first embodiment, is thus separated into two layers with a channel enclosed in the material of the wall 3. The channels make the wall 3 of the cover 1 slightly bulged and thus it is visible from the outside, where the openable area 4 and the sub-areas 11 are. Fig. 8 shows cross-sections of three oval channels.

Secondly, the manipulation element 6 protrudes inwards, i.e., from the inner side 12 of the cover 1. The bottom of the cavity 7 is thus at the free end of the protrusion forming the manipulation element 6. From the outside, the manipulation element 6 is thus only visible as an opening - the entrance to the cavity 7. A pictogram showing a screwdriver is shown next to the entrance, to guide workers who want to open the service opening 5.

The ribs in this embodiment have a height of about two thirds of the depth of the cavity 7. The cavity 7 is further reinforced by having thicker walls when compared to the cover 1 wall 3, by about 50 %.

### Alternative embodiments:

In further embodiments, the cover 1 from the first embodiment is provided individually, i.e., without the other lamp 2 components.

In an alternative embodiment, the weaking of the cover 1 wall 3 is formed by creating the openable area 4 from a separate piece of material and connecting it to the wall 3 by a weaker material than the material of the rest of the cover 1.

In another embodiment, the weaking is realized by making the whole openable area 4 from a thinner material than the rest of the cover 1 wall 3.

In another embodiment, the ribs are replaced by a flange, forming a step around the whole manipulation element 6. The step is connected to the surface of the openable area 4 and has a height of about half the depth of the cavity 7.

In another embodiment, the cavity 7 has a circular cross-section.

### Reference List

- 1.: cover
- 2.: lamp
- 3.: wall
- 4.: openable area
- 5.: service opening
- 6.: manipulation element
- 7.: cavity
- 8.: tool
- 9.: reinforcement
- 10.: groove
- 11.: sub-area
- 12.: inner side
- 13.: outer side

## Claims

1. Cover (1) for a vehicle lamp (2), the cover (1) comprising at least one wall (3), wherein the wall (3) comprises an openable area (4) for creating a service opening (5) in the cover (1), the openable area (4) being delimited by a weakening of the wall (3), **characterized in that** the cover (1) further comprises a manipulation element (6) attached to the wall (3) within the openable area (4), wherein the manipulation element (6) comprises a cavity (7) for insertion of a tool (8) for initiating pry-opening of the openable area (4), wherein the manipulation element (6) further comprises at least one reinforcement (9) for stiffening the cavity (7).

2. The cover (1) according to claim 1 **wherein** the cavity (7) is a flat cavity (7) for insertion of a flat-head screwdriver or a cross-shaped cavity (7) for insertion of a cross-point screwdriver.

3. The cover (1) according to any preceding claim **wherein** the reinforcement (9) for stiffening the cavity (7) comprises at least one of: one or more reinforcing ribs, thickness of wall of the cavity (7) larger than thickness of the wall (3) of the cover (1), material of wall of the cavity (7) stronger than material of the wall (3) of the cover (1).

4. The cover (1) according to claim 2 or 3 **wherein** the cavity (7) is a flat cavity (7) with a rectangular cross-section with two larger sides and two smaller sides, wherein the reinforcement (9) comprises for each of the larger sides of the cavity (7) at least one rib attached to the larger side and attached to the wall (3) of the cover (1) at the openable area (4).

5. The cover (1) according to any preceding claim **wherein** a depth of the cavity (7) is at least two times larger than thickness of the wall (3) of the cover (1).

6. The cover (1) according to any preceding claim **wherein** the weaking of the wall (3) comprises at least one of: a groove (10) delimiting the openable area (4), a different material on at least part of the openable area (4), the openable area (4) being from a thinner layer of material than rest of the wall (3) of the cover (1).

7. The cover (1) according to any preceding claim **wherein** the weaking of the wall (3) is formed by grooves (10) in the wall (3), wherein the openable area (4) comprises at least two sub-areas (11), which share at least one groove (10), wherein one of the sub-areas (11) is smaller than another sub-area (11), wherein the smaller sub-area (11) contains the manipulation element (6).

8. The cover (1) according to claim 7 **wherein** at least one fourth of surface area of the smaller sub-area (11) containing the manipulation element (6) is covered by the manipulation element (6).

9. The cover (1) according to any preceding claim **wherein** the openable area (4) comprises at least one corner for stress concentration during opening.

10. The cover (1) according to claim 9 **wherein** the corner has two sides and the manipulation element (6) is located in the corner at a distance of at most 1 cm from each of the two sides.

11. The cover (1) according to any preceding claim **wherein** the cover (1) has an inner side (12) and an outer side (13), wherein the manipulation element (6) protrudes from the inner side (12).

12. The cover (1) according to any preceding claim **wherein** the cover (1) has an inner side (12) and an outer side (13), wherein the manipulation element (6) protrudes from the outer side (13).

## Amended claims

### Amended claims in accordance with Rule 137(2) EPC.

1. Cover (1) for a vehicle lamp (2), the cover (1) comprising at least one wall (3), wherein the wall (3) comprises an openable area (4) for creating a service opening (5) in the cover (1), the openable area (4) being delimited by a weakening of the wall (3), wherein the cover (1) further comprises a manipulation element (6) attached to the wall (3) within the openable area (4), wherein the manipulation element (6) comprises a cavity (7) for insertion of a tool (8) for initiating pry-opening of the openable area (4), wherein the manipulation element (6) further comprises at least one reinforcement (9) for stiffening the cavity (7), wherein the cavity (7) is a flat cavity (7) for insertion of a flat-head screwdriver, **characterized in that** the openable area (4) is divided into sub-areas (11), wherein one of the sub-areas (11) is smaller than another sub-area (11), wherein the smaller sub-area (11) has a corner directed towards another sub-area (11) and contains the manipulation element (6), wherein the manipulation element (6) has a larger side corresponding to an inner side of the cavity (7) where a flat-head screwdriver can be braced, wherein the larger side has a rib extending into the corner and symmetrical around an axis of the corner, wherein a free end of the rib is is at most 5 mm away from the tip of the corner.

2. The cover (1) according to claim 1 **wherein** the reinforcement (9) for stiffening the cavity (7) comprises at least one of: thickness of wall of the cavity (7) larger than thickness of the wall (3) of the cover (1), material of wall of the cavity (7) stronger than material of the wall (3) of the cover (1).

3. The cover (1) according to claim 2 **wherein** the cavity (7) is a flat cavity (7) with a rectangular cross-section with two larger sides and two smaller sides, wherein the reinforcement (9) comprises for each of the larger sides of the cavity (7) at least one rib attached to the larger side and attached to the wall (3) of the cover (1) at the openable area (4).

4. The cover (1) according to any preceding claim **wherein** a depth of the cavity (7) is at least two times larger than thickness of the wall (3) of the cover (1).

5. The cover (1) according to any preceding claim **wherein** the weaking of the wall (3) comprises at least one of: a groove (10) delimiting the openable area (4), a different material on at least part of the openable area (4), the openable area (4) being from a thinner layer of material than rest of the wall (3) of the cover (1).

6. The cover (1) according to any preceding claim **wherein** the weaking of the wall (3) is formed by grooves (10) in the wall (3), wherein the openable area (4) comprises at least two sub-areas (11), which share at least one groove (10), wherein one of the sub-areas (11) is smaller than another sub-area (11), wherein the smaller sub-area (11) contains the manipulation element (6).

7. The cover (1) according to claim 6 **wherein** at least one fourth of surface area of the smaller sub-area (11) containing the manipulation element (6) is covered by the manipulation element (6).

8. The cover (1) according to any preceding claim **wherein** the corner has two sides and the manipulation element (6) is located in the corner at a distance of at most 1 cm from each of the two sides.

9. The cover (1) according to any preceding claim **wherein** the cover (1) has an inner side (12) and an outer side (13), wherein the manipulation element (6) protrudes from the inner side (12).

10. The cover (1) according to any preceding claim **wherein** the cover (1) has an inner side (12) and an outer side (13), wherein the manipulation element (6) protrudes from the outer side (13).
